# EUROPEAN PATENT APPLICATION

(11) **EP 4 252 552 A1**
(43) Date of publication of application: **04.10.2023**
(21) Application number: 21898758.4
(22) Date of filing: 30.11.2021
(51) Int. Cl.: A23L 29/20, A23L 29/256, A23L 29/238, A23L 21/00

(54) **COMPOSITION FOR GELLED FOOD, AND GELLED FOOD HAVING PLURALITY OF LAYERS COMPRISING SAME**

(30) Priority: 30.11.2020 KR 20200165160
(71) Applicant: CJ Cheiljedang Corporation, Seoul 04560 (KR)
(72) Inventor: SHIM, Hee Ryung, Seoul 04560 (KR); LEE, Suk Young, Seoul 04560 (KR); JEONG, Ji Hyeon, Seoul 04560 (KR); PARK, Hong Wook, Seoul 04560 (KR); KANG, Ki Moon, Seoul 04560 (KR)
(74) Representative: Mummery, Thomas Zack
(86) International application number: PCT/KR2021/017923
(87) International publication number: WO 2022/114933

(57) **Abstract**

The present application relates to a composition for a gelled food having a plurality of layers and including a gelling agent which includes (a) at least one selected from agar and carrageenan, and (b) locust bean gum, and to a gelled food having a plurality of layers and including the above-described composition for a gelled food.

## Description

### TECHNICAL FIELD

The present application relates to a composition for a gelled food having a plurality of layers, and to a gelled food having a plurality of layers 'and including the composition.

### BACKGROUND ART

Gelled foods such as jelly and purine are produced by placing a composition, in which various types of gelling agents, thickeners, additives, and the like are mixed, in a container, followed by cooling and gelling the composition. These gelled foods are used as frozen desserts, dishes, snacks, and the like, and are preferred by people of all ages and genders.

Meanwhile, these gelled foods have various physical properties and mouthfeels depending on the type, composition, additive, and the like of a gelling agent added, and various types of jellies are produced by controlling the above.

Korean Patent Laid-Open Publication No. 0166638 relates to a jelly of a pulp mouthfeel, and discloses a jelly with a crunchy mouthfeel unique to pulp, and with a liquid juice produced during a thawing process and further enhancing the feel of eating natural fruits. However, while it is possible to keep the quality since the jelly is stored and distributed frozen, when the jelly is stored for a long period of time at room temperature, there is a high possibility of degradation in shape preservation or of contamination by microorganisms such as bacteria.

Therefore, the present inventors have attempted to produce a gelled food with high microbial safety while manufacturing a gelled food having a plurality of layers, going further from an attempt to control the taste and mouthfeel of a typical single-layered jelly.

In the course of studying for this purpose, there has been a need addressed for maintaining the shape retainability of a gelled food having a plurality of layers such that the layers do not collapse during or after a production process, and at the same time, for producing the gelled food with adequate fluidity such that the gelled food is neither too hard nor too soft. In addition, the present inventors have attempted to produce a gelled food whose appearance, mouthfeel, microbial safety, and the like are maintained even after being stored for a long period of time at room temperature, going further from an attempt to produce a typical gelled food for refrigerated/frozen storage.

Therefore, an excellent gelled food has been produced in which a plurality of layers each having a different taste and mouthfeel are not mixed, thereby increasing sensory preference of consumers by allowing the consumers to feel two or more tastes and mouthfeels, shape retainability is provided to maintain the shape of the gelled food, and furthermore, microbial safety is ensured even when the gelled food is distributed or simply stored for a long period of time at room temperature or above.

### [Prior Art Document]

Korean Patent Laid-Open Publication No. 0166638

### DISCLOSURE OF THE INVENTION

### TECHNICAL PROBLEM

The present application provides a composition for a gelled food having a plurality of layers and obtained through the combination of specific gums for gelled foods, the composition in which microbial safety may be significantly improved compared to a prior art even when the composition is stored and distributed for a long period of time at room temperature or above, shape retainability is maintained so that layers do not collapse when the composition has a plurality of layers, and furthermore, sensory quality such as mouthfeel is improved. The present application also provides a gelled food having a plurality of layers, wherein each layer has a different taste and mouthfeel.

### TECHNICAL SOLUTION

Hereinafter, a composition for a gelled food having a plurality of layers according to an embodiment of the present application will be described.

According to an aspect of the present application, there is provided a composition for a gelled food having a plurality of layers, and including a gelling agent which includes (a) at least one selected from agar and carrageenan, and (b) locust bean gum.

The gelling agent used in the composition for a gelled food of the present application may include at least one selected from agar and carrageenan. Specifically, the gelling agent may necessarily include agar or carrageenan.

Agar included in the composition for a gelled food is to gel a gelled food produced using the composition for a gelled food, thereby imparting firmness to the gelled food while imparting a puree mouthfeel thereto. By controlling the degree of gelling of the gelled food according to the type and content of the agar, it is possible to control the degree of firmness or strength of the gelled food to impart a puree mouthfeel thereto.

The agar allows a consumer to be able to feel the mouthfeel of fresh fruits and feel the taste and aroma of raw materials themselves when eating gelled foods.

The agar is a type of food that has been dried by freezing or compressing gelidium jelly, and the main ingredient thereof is agarose, which accounts for more than about 60% of the agar. Usually, the gelidium jelly is produced using a seaweed which belongs to the Gelidiaceae family, such as Gelidium, Pterocladia tenuis, Acanthopeltis japonica, or the like, or may be produced using a seaweed such as Gracilaria verrucosa or Meristotheca papulosa.

As described above, the agar has strong coagulation force and strong affinity with water, and thus, has strong ability to retain moisture in a predetermined form. When applied to a composition for a gelled food, the agar may control the physical properties of a gelled food, such as mouthfeel and/or shape retainability. In particular, agar is essential in implementing mouthfeel and/or shape retainability.

The agar may be included in an amount within a range consisting of at least one lower limit selected from 0.5 wt%, 0.51 wt%, 0.52 wt%, 0.53 wt%, 0.54 wt%, 0.55 wt%, 0.56 wt%, 0.57 wt%, 0.58 wt%, 0.59 wt%, 0.6 wt%, 0.61 wt%, 0.62 wt%, 0.63 wt%, 0.64 wt%, 0.65 wt%, 0.66 wt%, 0.67 wt%, 0.68 wt%, 0.69 wt%, 0.7 wt%, 0.71 wt%, 0.72 wt%, 0.73 wt%, 0.74 wt%, 0.75 wt%, 0.76 wt%, 0.77 wt%, 0.78 wt%, 0.79 wt%, 0.8 wt%, 0.81 wt%, 0.82 wt%, 0.83 wt%, 0.84 wt%, 0.85 wt%, 0.86 wt%, 0.87 wt%, 0.88 wt%, 0.89 wt%, and 0.9 wt%, and at least one upper limit selected from 1.0 wt%, 0.99 wt%, 0.98 wt%, 0.97 wt%, 0.96 wt%, 0.95 wt%, 0.94 wt%, 0.93 wt%, 0.92 wt%, 0.91 wt%, 0.9 wt%, 0.89 wt%, 0.88 wt%, 0.87 wt%, 0.86 wt%, 0.85 wt%, 0.84 wt%, 0.83 wt%, 0.82 wt%, 0.81 wt%, and 0.8 wt% based on the total weight of the composition for a gelled food. For example, the agar may be included in an amount of 0.5 to 1.0 wt%, 0.6 to 1.0 wt%, 0.7 to 1.0 wt%, 0.8 to 1.0 wt%, 0.8 to 0.95 wt%, 0.8 to 0.9 wt%, 0.5 to 0.9 wt%, or 0.5 to 0.8 wt% based on the total weight of the composition for a gelled food.

When the content of the agar satisfies the above range, it is possible to control the physical properties, such as compression strength, fracturability, and/or hardness, of a gelled food produced using the composition for a gelled food to impart a puree mouthfeel and a pulp mouthfeel in addition to softness and smoothness to the gelled food. In addition, it is possible to improve the shape retainability of the gelled food to improve the room temperature distribution stability, storage stability, and/or sensory quality.

Carrageenan included in the composition for a gelled food is to gel a gelled food produced using the composition for a gelled food, thereby imparting a sense of resilience to the gelled food. The carrageenan is one of galactose-based polysaccharides obtained by hot water extraction from Irish moss of red algae.

Since the composition for a gelled food includes carrageenan, the degree of gelling, viscosity, and/or water retentivity may be controlled to impart a resilient mouthfeel to the gelled food.

The carrageenan may be included in an amount within a range consisting of at least one lower limit selected from 0.5 wt%, 0.51 wt%, 0.52 wt%, 0.53 wt%, 0.54 wt%, 0.55 wt%, 0.56 wt%, 0.57 wt%, 0.58 wt%, 0.59 wt%, 0.6 wt%, 0.61 wt%, 0.62 wt%, 0.63 wt%, 0.64 wt%, 0.65 wt%, 0.66 wt%, 0.67 wt%, 0.68 wt%, 0.69 wt%, and 0.7 wt%, and at least one upper limit selected from 1.0 wt%, 0.99 wt%, 0.98 wt%, 0.97 wt%, 0.96 wt%, 0.95 wt%, 0.94 wt%, 0.93 wt%, 0.92 wt%, 0.91 wt%, 0.9 wt%, 0.89 wt%, 0.88 wt%, 0.87 wt%, 0.86 wt%, 0.85 wt%, 0.84 wt%, 0.83 wt%, 0.82 wt%, 0.81 wt%, 0.8 wt%, less than 0.8 wt%, 0.79 wt%, 0.78 wt%, 0.77 wt%, 0.76 wt%, 0.75 wt%, 0.74 wt%, 0.73 wt%, 0.72 wt%, 0.71 wt%, and 0.7 wt% based on the total weight of the composition for a gelled food. For example, the carrageenan may be included in an amount of 0.5 to 1.0 wt%, 0.5 to 0.9 wt%, 0.5 to 0.8 wt%, 0.5 wt% to less than 0.8 wt%, 0.5 to 0.79 wt%, 0.5 to 0.75 wt%, 0.5 to 0.7 wt%, 0.6 to 0.8 wt%, or 0.6 wt% to less than 0.8 wt% based on the total weight of the composition for a gelled food.

When the content of the carrageenan satisfies the above range, it is possible to control the physical properties such as viscosity of a gelled food produced using the composition for a gelled food to impart shape retainability and/or a resilient mouthfeel to the gelled food, thereby improving the mouthfeel thereof.

Meanwhile, as described above, since the agar included in the composition for a gelled food of the present application may provide a puree mouthfeel and/or a pulp mouthfeel to a gelled food, and the carrageenan may impart a resilient mouthfeel to the gelled food, the agar may be used alone, or the two (the agar and the carrageenan) may be mixed in an appropriate blending ratio and used, so that a gelled food having various mouthfeels may be provided.

In addition, the gelling agent included in the composition for a gelled food may include locust bean gum, and may necessarily include the locust bean gum.

Locust bean gum included in the composition for a gelled food may control the adhesiveness or viscosity of a gelled food produced using the composition for a gelled food. Particularly, by using the locust bean gum together with the agar and/or the carrageenan, the shape retainability of the gelled food may be improved, so that layers do not collapse or mixed in the gelled food having a plurality of layers when the gelled food is stored and distributed for a long period of time, and the physical properties and/or mouthfeel of the gelled food may be maintained.

The locust bean gum may be obtained by collecting the same from a carob tree which belongs to the legume family, and then separating and purifying an endosperm portion. The main ingredient of the locust bean gum may include a neutral polysaccharide composed of mannose and galactose. In addition, when heated, the locust bean gum is dissolved transparently and becomes mucus with good water retaining force, so that the above effect may be increased when used together with other gelling agents, thickeners, or stabilizers.

The locust bean gum may be included in an amount within a range consisting of at least one lower limit selected from 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, 0.2 wt%, 0.21 wt%, 0.22 wt%, 0.23 wt%, 0.24 wt%, and 0.25 wt%, and at least one upper limit selected from 0.7 wt%, 0.69 wt%, 0.68 wt%, 0.67 wt%, 0.66 wt%, 0.65 wt%, 0.64 wt%, 0.63 wt%, 0.62 wt%, 0.61 wt%, 0.6 wt%, 0.59 wt%, 0.58 wt%, 0.57 wt%, 0.56 wt%, 0.55 wt%, 0.54 wt%, 0.53 wt%, 0.52 wt%, 0.51 wt%, 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt% or less, less than 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, 0.29 wt%, 0.28 wt%, 0.27 wt%, 0.26 wt%, 0.25 wt%, 0.24 wt%, 0.23 wt%, 0.22 wt%, 0.21 wt%, and 0.2 wt% based on the total weight of the composition for a gelled food. For example, the locust bean gum may be included in an amount of 0.1 to 0.7 wt%, 0.1 to 0.6 wt%, 0.1 to 0.5 wt%, 0.1 to 0.4 wt%, 0.1 wt% to less than 0.4 wt%, 0.1 to 0.3 wt%, 0.1 to 0.2 wt%, 0.2 to 0.7 wt%, 0.2 to 0.6 wt%, 0.2 to 0.5 wt%, or 0.2 to 0.4 wt% based on the total weight of the composition for a gelled food.

When the content of the locust bean gum satisfies the above range, it is possible to control the physical properties such as viscosity of a gelled food to impart shape retainability to the gelled food, thereby improving the storage stability and/or sensory quality (including appearance) of the gelled food.

In addition, when the locust bean gum is included in a gelling agent whose main ingredient is the agar or the carrageenan described above, for example, when the locust bean gum is blended with the agar, the locust bean gum may be included in an amount of 0.1 wt% or greater, specifically 0.1 to 0.7 wt%, based on the total weight of the composition for a gelled food, and when the locust bean gum is blended with the carrageenan, the locust bean gum may be included in an amount of 0.2 wt% or greater, specifically 0.2 to 0.7 wt%, based on the total weight of the composition for a gelled food.

Particularly, in the gelling agent included in the composition for a gelled food, the agar and the locust bean gum may be included at a weight ratio of 3:1 to 8:1, or 3:1 to 4:1. When the mixing weight ratio of the agar and the locust bean gum included in the gelling agent satisfies the above range, it is possible to control the physical properties of a gelled food produced using the composition for a gelled food, such as compression strength, hardness, and the like, thereby imparting shape retainability, and to improve stability and microbial safety, in addition thereto.

Also, in the gelling agent included in the composition for a gelled food, the carrageenan and the locust bean gum may be included at a weight ratio of 1.5:1 to less than 8:1, 1.5 to 4:1, or 1.5 to 3:1. When the mixing weight ratio of the carrageenan and the locust bean gum included in the gelling agent satisfies the above range, it is possible to control the physical properties of a gelled food produced using the composition for a gelled food, such as compression strength, hardness, and the like, thereby imparting shape retainability, and to improve stability and/or microbial safety, in addition thereto.

The gelling agent included in the composition for a gelled food may be included in an amount within a range consisting of at least one lower limit selected from 0.8 wt%, 0.81 wt%, 0.82 wt%, 0.83 wt%, 0.84 wt%, 0.85 wt%, 0.86 wt%, 0.87 wt%, 0.88 wt%, 0.89 wt%, 0.9 wt%, 0.91 wt%, 0.92 wt%, 0.93 wt%, 0.94 wt%, 0.95 wt%, 0.96 wt%, 0.97 wt%, 0.98 wt%, 0.99 wt%, and 1.0wt%, and at least one upper limit selected from 1.2wt%, 1.19wt%, 1.18wt%, 1.17 wt%, 1.16 wt%, 1.15 wt%, 1.14 wt%, 1.13 wt%, 1.12 wt%, 1.11 wt%, 1.1 wt%, 1.09 wt%, 1.08 wt%, 1.07 wt%, 1.06 wt%, 1.05wt%, 1.04wt%, 1.03 wt%, 1.02wt%, 1.01 wt%, and 1 wt% based on the total weight of the composition for a gelled food. For example, the gelling agent may be included in an amount of 0.8 to 1.2 wt%, 0.8 to 1.0 wt%, 0.9 to 1.2 wt%, 1.0 to 1.2 wt%, 0.9 to 1.1 wt%, 0.9 to 1.0 wt%, or 0.95 to 1.0 wt% based on the total weight of the composition for a gelled food.

When the total content of the gelling agent safeties the above range, even when stored and distributed for a long period of time at room temperature or above, a gelled food having a plurality of layers has excellent shape retainability with no collapsed layers, and has safety against microorganisms such as various bacteria and Escherichia coli, so that consumers may feel excellent sensory quality.

The gelling agent included in the composition for a gelled food may further include a gum, such as xanthan gum, guar gum, Arabic gum, or tara gum, other than the types described above.

Xanthan gum further included in the composition for a gelled food may control the adhesiveness and/or viscosity of a gelled food, serve to enhance emulsion stability, and improve the physical properties and/or tactility of the gelled food.

The xanthan gum is a polymer fermented polysaccharide obtained by using the Xanthomonas campestris bacterium of cabbage, and when used together with the locust bean gum of the present application, there may be a synergistic effect in the control of gelling and/or viscosity.

The guar gum is obtained by pulverizing an endosperm portion of a guar seed, and when used together with the locust bean gum of the present application, the guar gum serves to control gelling and/or stickiness (viscosity). Also, the guar gum is rich in solute fiber, and thus, is low-calorie in terms of nutrition.

The Arabic gum is a type of natural gum made by hardening acacia sap, and is included in the composition for a gelled food to serve to control stickiness (viscosity). Furthermore, the Arabic gum may function as a stabilizer for a gelled food.

The tara gum may be obtained by pulverizing an endosperm portion of a tara seed of Actinidiaceae, and when used together with the locust bean gum of the present application, the tara gum may serve to control gelling and/or stickiness (viscosity).

However, when only agar or carrageenan, which is a main raw material, and xanthan gum are mixed as the gelling agent (that is, when only xanthan gum, guar gum, Arabic gum, or tara gum is mixed without locust bean gum), there is a problem in that it is difficult to impart sufficient shape retainability required for a gelled food produced using the composition for a gelling food.

At least one of the xanthan gum, the guar gum, the Arabic gum, and the tara gum may be included in an amount within a range consisting of at least one lower limit selected from 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, and 0.2 wt%, and at least one upper limit selected from 0.2 wt%, 0.19 wt%, 0.18 wt%, 0.17 wt%, 0.16 wt%, 0.15 wt%, 0.14 wt%, 0.13 wt%, 0.12 wt%, 0.11 wt%, and 0.1 wt% based on the total weight of the composition for a gelled food. For example, at least one of the xanthan gum, the guar gum, the Arabic gum, and the tara gum may be included in an amount of 0.1 to 0.2 wt% based on the total weight of the composition for a gelled food.

When the content of at least one of the xanthan gum, the guar gum, the Arabic gum, and the tara gum satisfies the above range, it is possible to control the physical properties such as viscosity of a gelled food to impart shape retainability to the gelled food, thereby improving the storage stability and/or sensory quality (including appearance) of the gelled food. There may be a synergistic effect when locust bean gum is mixed together therewith.

Particularly, when at least one of locust bean gum, xanthan gum, guar gum, Arabic gum, and tara gum is used in combination with the gelling agent having agar or carrageenan as a main ingredient thereof, it is possible to control the compression strength, fracturability, and/or hardness of the gelled food while imparting shape retainability thereto, and to provide a gelled food having a smooth mouthfeel, such as a resilient mouthfeel or a puree mouthfeel and/or a pulp mouthfeel, by properly selecting and mixing the type of a main component of the gelling agent. Even when a gelled food having a plurality of layers is produced using such a composition for a gelled food, it is possible to maintain the appearance of the gelled food having a plurality of layers even at room temperature or above, so that consumers may be satisfied with sensory quality such as appearance and mouthfeel, and furthermore, it is possible to improve storage stability by imparting microbial safety.

In addition, the gelling agent may not include a gellan gum, and the gelling agent may not substantially include a gellan gum.

When the gelling agent does not substantially include a gellan gum, it may mean that the gellan gum is not included in the gelling agent at all, or it may mean that even when included in a trace amount, the gellan gum may be included in a trace amount (e.g., an amount of less than or equal to/less than 0.001 wt%) in the form of impurities.

The composition for a gelled food may further include an additive, if necessary. For example, the composition for a gelled food may further include at least one selected from puree, an acidulant, a flavoring, and a sweetener.

The puree is prepared thick by boiling or grinding a fruit and straining the boiled or ground fruit through a fine sieve, and may be included in the composition for a gelled food to serve to improve the savor or flavor of a gelled food.

The puree may include, for example, mango puree, apple puree, pear puree, grapefruit puree, or orange puree, but is not limited thereto. Any fruit puree which may be commonly applied to a food may be included in the composition for a gelled food.

The puree may be included in an amount within a range consisting of at least one lower limit selected from 0.005 wt%, 0.01 wt%, 0.02 wt%, 0.03 wt%, 0.04 wt%, 0.05 wt%, 0.06 wt%, 0.07 wt%, 0.08 wt%, 0.09 wt%, and 0.1 wt%, and at least one upper limit selected from 20 wt%, 19 wt%, 18 wt%, 17 wt%, 16 wt%, 15 wt%, 14 wt%, 13 wt%, 12 wt%, 11 wt%, and 10 wt% based on the total weight of the composition for a gelled food. For example, the puree may be included in an amount of 0.005 to 20 wt%, or 0.01 to 20 wt% based on the total weight of the composition for a gelled food.

When the content of the puree satisfies the above range, it is possible to improve the savor or flavor of a gelled food, and may provide a pulp mouthfeel and/or a puree mouthfeel to the gelled food.

The acidulant may control the mouthfeel and/or sensory quality of a gelled food, and furthermore, may serve to control the pH of the gelled food, and to impart preservation and/or antioxidation to the gelled food.

The acidulant may include an organic acid, and the organic acid may be, for example, citric acid, hydrous citric acid, gluconic acid, gluconic acid, tartaric acid, malic acid, fumaric acid, lactic acid, adipic acid, or glacial acetic acid, but is not limited thereto.

The acidulant may be included in an amount within a range consisting of at least one lower limit selected from 0.005 wt%, 0.01 wt%, 0.02 wt%, 0.03 wt%, 0.04 wt%, 0.05 wt%, 0.06 wt%, 0.07 wt%, 0.08 wt%, 0.09 wt%, and 0.1 wt%, and at least one upper limit selected from 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, and 0.2 wt% based on the total weight of the composition for a gelled food. For example, the acidulant may be included in an amount of 0.005 to 0.5 wt%, or 0.01 to 0.5 wt% based on the total weight of the composition for a gelled food.

When the content of the acidulant satisfies the above range, it is possible to control the mouthfeel and/or sensory quality of a gelled food, and furthermore, to control the pH of the gelled food, and to impart preservation and/or antioxidation to the gelled food.

The flavoring may be included in the composition for a gelled food to serve as a preference component to improve the savor, or flavor of a gelled food. The flavoring may include one or a plurality of natural flavorings or synthetic flavorings which may be added to food, and examples of the flavoring may include an orange flavoring, a mango flavoring, a strawberry flavoring, a grape flavoring, and the like, but is not limited thereto.

The flavoring may be included in an amount within a range consisting of at least one lower limit selected from 0.005 wt%, 0.01 wt%, 0.02 wt%, 0.03 wt%, 0.04 wt%, 0.05 wt%, 0.06 wt%, 0.07 wt%, 0.08 wt%, 0.09 wt%, and 0.1 wt%, and at least one upper limit selected from 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, and 0.2 wt% based on the total weight of the composition for a gelled food. For example, the flavoring may be included in an amount of 0.005 to 0.5 wt%, or 0.01 to 0.5 wt% based on the total weight of the composition for a gelled food.

When the content of the flavoring satisfies the above range, it is possible to improve the savor or flavor of a gelled food.

The sweetener is to impart sweetness to the gelled food, and any natural sweetener or synthetic sweetener, such as sugar, glucose, fructose, liquid fructose, lactose, honey, syrup, or oligosaccharide, may be used without limitation as long as it may be added to food.

The sweetener may be included in an amount within a range consisting of at least one lower limit selected from 3 wt%, 4 wt%, 5 wt%, 6 wt%, 7 wt%, 8 wt%, 9 wt%, 10 wt%, 11 wt%, 12 wt%, 13 wt%, 14 wt%, and 15 wt%, and at least one upper limit selected from 30 wt%, 29 wt%, 28 wt%, 27 wt%, 26 wt%, 25 wt%, 24 wt%, 23 wt%, 22 wt%, 21 wt%, and 20 wt% based on the total weight of the composition for a gelled food. For example, the sweetener may be included in an amount of 3 to 30 wt%, 3 to 20 wt%, 5 to 20 wt%, or 10 to 20 wt% based on the total weight of the composition for a gelled food.

When the content of the sweetener satisfies the above range, it is possible to impart sweetness to a gelled food to improve the savor or flavor of the gelled food.

In addition to the above-described additives, the composition for a gelled food may further include an additive such as lactic acid bacteria, a vitamin, an emulsifier, an excipient, a colorant, an antioxidant, or a combination thereof, if necessary.

As the composition for a gelled food further includes the additives as described above, it is possible to impart physical properties or features required for a gelled food produced using the composition for a gelled food.

As additives which may be included in the composition for a gelled food, any additive may be used without limitation as long as it is disclosed in the Food Codex, or is commonly known to be included in food.

When the additives are included in the composition for a gelled food, each of the additives may be included in an amount within a range consisting of at least one lower limit selected from 0.005 wt%, 0.01 wt%, 0.02 wt%, 0.03 wt%, 0.04 wt%, 0.05 wt%, 0.06 wt%, 0.07 wt%, 0.08 wt%, 0.09 wt%, and 0.1 wt%, and at least one upper limit selected from 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, and 0.2 wt% based on the total weight of the composition for a gelled food. For example, each of the additives may be included in an amount of 0.005 to 0.5 wt%, or 0.01 to 0.5 wt% based on the total weight of the composition for a gelled food.

When the content of each of the additives satisfies the above range, it is possible to provide a composition for a gelled food and/or a gelled food to which features of each additive are imparted.

The composition for a gelled food may further include water as a remainder in addition to the gelling agent.

The gelled food is a concept including all foods having a gel form (shape). In general, a gel may mean something having a certain form in a solid or semi-solid state obtained by heating or cooling a sol in which solid particles are dispersed in a liquid. The gel may mean that the sol is gelled by forming a secondary bond such as a chemical bond.

The gelled food is not limited as long as it is one of the above foods, but may include, for example, jelly, spread, or pudding.

The gelled food may include a food which may be distributed at room temperature, or it may include a food which may be eaten at room temperature.

In addition, the gelled food is not necessarily a food which may be distributed only at room temperature, but may include a food which may be easily distributed and/or stored under harsh conditions at a temperature higher than room temperature.

The gelled food may be eaten immediately after being produced, or may be distributed and/or kept, and stored at room temperature or above, and then be eaten without a separate treatment.

The gelled food of the present application may include a layered gelled food having a plurality of layers. At this time, in the gelled food having a plurality of layers, the layers may mean layers in a vertical direction or a layer in a horizontal direction, but the direction is not necessarily limited to the vertical or horizontal direction. The layers may mean layers distinguished by different colors (a*, b*), brightnesses (L*), transparencies, or the like when observed with the naked eye.

The layers of the gelled food having a plurality of layers do not necessarily have a clear boundary between the layers. As described above, it will be sufficient if the layers may be distinguished by different colors (a*, b*), brightnesses (L*), transparencies, or the like when observed with the naked eye.

At this time, when the gelled food includes a gelled food having a plurality of layers, at least one layer of the gelled food having a plurality of layers may include the composition for a gelled food. That is, at least one layer of the gelled food having a plurality of layers may be produced using the composition for a gelled food having a plurality of layers.

The difference in sugar content between one layer of the gelled food having a plurality of layers and the other layers thereof may be 5 brix or more, specifically 10 brix or more. Specifically, the other layers may be layers adjacent to a first composition for a gelled food of the present application. As long as there is a difference in sugar content as described above, the other layers of the gelled food having a plurality of layers may include any composition (e.g., a jelly solution and the like) capable of producing a gelled food and having the same or different composition from the composition for a gelled food.

Preferably, a layer at the lowest end of the gelled food having a plurality of layers may include the composition for a gelled food. That is, the sugar content of any composition for producing the other layers of the gelled food having a plurality of layers may be at least 5 brix, specifically at least 10 brix lower than the sugar content of the composition for a gelled food.

The above difference in sugar content may be achieved by controlling the type and/or content of a sweetener included in each composition.

The composition for a gelled food of the present application may be referred to as a first composition for a gelled food, and a composition for the other layers of the gelled food having a plurality of layers may be referred to as a second composition for a gelled food. When the other layers are a plurality of layers, there may be a second composition for a gelled food, a third composition for a gelled food, and the like depending on the number of the layers.

In the case of the second composition for a gelled food, which is for the other layers of the gelled food having a plurality of layers, any commercially available gelling agent may be used without limitation as long as it is a gelling agent which may be used for a gelled food.

For example, an example of a gelling agent which may be used for the second composition for a gelled food, which is for the other layers of the gelled food having a plurality of layers, may include carrageenan, agar, xanthan gum, guar gum, tara gum, Arabic gum, locust bean gum, low acyl gellan gum, high acyl gellan gum, or a composition thereof, but is not limited thereto.

In addition, the content of a gelling agent included in the second composition for a gelled food, which is for the other layers of the gelled food having a plurality of layers, may also be selected at an appropriate level as long as a gelled food may be produced by a typical method.

That is, when the gelled food of the present application is a gelled food having a plurality of layers, there is an advantage in that a composition available for the other layers other than a layer using the composition for a gelled food of the present application may be used without limitation.

The compression strength of a layer including the composition for a gelled food in the gelled food having a plurality of layers may be within a range consisting of at least one lower limit selected from 3.1 N, 3.2 N, 3.3 N, 3.4 N, 3.5 N, 3.6 N, 3.7 N, 3.8 N, 3.9 N, 4 N, 4.1 N, 4.2 N, 4.3 N, 4.4 N, 4.5 N, 4.6 N, 4.7 N, 4.8 N, 4.9 N, 5 N, 5.1 N, 5.2 N, 5.3 N, 5.4 N, 5.5 N, 5.6 N, 5.7 N, 5.8 N, 5.9 N, and 6 N, and at least one upper limit selected from 20 N, 19.5 N, 19 N, 18.5 N, 18 N, 17.5 N, 17 N, 16.5 N, 16 N, 15.5 N, 15 N, 14.5 N, 14 N, 13.5 N, 13 N, 12.5 N, 12 N, 11.5 N, 11 N, 10.5 N, 10 N, and 9.5 N. For example, the compression strength of the layer including the composition for a gelled food may be 3.1 to 20 N, 4 to 19 N, 5 to 16 N, 5 to 15 N, 5 to 10 N, 5.3 to 20 N, 5.3 to 15 N, 6 to 20 N, 6 to 15 N, or 6 to 10 N.

The compression strength may be a measurement value obtained from a Texture Analyzer (TA) analysis result, specifically, a measurement value obtained from a TA XT-plus (Stable Micro System, UK) analysis result.

The TA analysis conditions are as shown in Table 1 below.

**[Table 1]**

| Items | Conditions |
|---|---|
| Sample amount | 80 g |
| Probe | Circular shape, diameter 35 mm |
| Pre-test speed | 5 mm/sec |
| Test-speed | 2 mm/sec |
| Post-test speed | 2 mm/sec |
| Pressure | 98% compression |
| Height | 50 mm |

When the compression strength of the layer including the composition for a gelled food in the gelled food having a plurality of layers satisfies the above range, the shape retainability of the gelled food having a plurality of layers is maintained with no collapsed layers even when the gelled food is stored and distributed for a long period of time at room temperature or above, the mouthfeel and/or sensory quality is also maintained, and furthermore, microbial safety may be imparted to the gelled food.

The hardness of the layer including the composition for a gelled food in the gelled food having a plurality of layers may be within a range consisting of at least one lower limit selected from 5 N, 5.1 N, 5.2 N, 5.3 N, 5.4 N, 5.5 N, 5.6 N, 5.7 N, 5.8 N, 5.9 N, 6 N, 6.1 N, 6.2 N, 6.3 N, 6.4 N, 6.5 N, 6.6 N, 6.7 N, 6.8 N, 6.9 N, and 7 N, and at least one upper limit selected from 15 N, 14.8 N, 14.6 N, 14.5 N, 14.4 N, 14.2 N, 14 N, 13.8 N, 13.6 N, 13.5 N, 13.4 N, 13.2 N, 13 N, 12.8 N, 12.6 N, 12.5 N, 12.4 N, 12.2 N, 12 N, 11.8 N, 11.6 N, 11.5 N, 11.4 N, 11.2 N, 11 N, 10.8 N, 10.6 N, 10.5 N, 10.4 N, 10.2 N, and 10 N. For example, the hardness of the layer including the composition for a gelled food may be about 5 to 15 N, 5 to 12 N, 5 to 11.5 N, 5 to 11 N, 5 to 10 N, 5.8 to 12 N, 5.8 to 11.8 N, or 5.8 to 11.5 N.

The hardness (degree of firmness) of the layer including the composition for a gelled food in the gelled food having a plurality of layers may be a measurement value obtained from a Texture Analyzer (TA) analysis result, specifically, a measurement value obtained from a TA XT-plus (Stable Micro System, UK) analysis result. The TA analysis conditions are as shown in Table 1 above.

When the hardness of the layer including the composition for a gelled food in the gelled food having a plurality of layers satisfies the above range, the shape retainability of the layered gelled food having two or more layers is excellent, and accordingly, the roomtemperature distribution stability and/or storage stability of the gelled food may be excellent. In addition, the sensory quality of the gelled food may be improved since the gelled food may have a resilient mouthfeel, or a pulp mouthfeel and/or a puree mouthfeel.

The change in microbial concentration between immediately after the preparation of the layer including the composition for a gelled food in the gelled food having a plurality of layers and after the storage of the layer at 35°C for 3 months may be less than 10¹ CFU/g.

That is, the gelled food includes the composition for a gelled food, and may be produced from the composition for a gelled food.

Any known method for producing a gelled food may be used as a method for producing the gelled food. For example, processes such as a gelling step, a packaging step, a heat sterilization step, and/or a cooling step may be included to produce the gelled food, and although not listed above, any process required for producing a gelled food may be included without limitation.

Specifically, the gelling step may be to disperse, mix, and stir the gelling agent in water (or purified water) to form a gelled product. At this time, the gelling temperature may be within a range consisting of at least one lower limit selected from 80°C, 81°C, 82°C, 83°C, 84°C, 85°C, 86°C, 87°C, 88°C, 89°C, and 90°C, and at least one upper limit selected from 100°C, 99°C, 98°C, 97°C, 96°C, 95°C, 94°C, 93°C, 92°C, 91°C, and 90°C.

When the above gelling temperature is maintained, the formation of the gelled product may be facilitated, and in particular, the physical properties such as compression strength, fracturability, hardness, and viscosity may be controlled to impart shape retainability and/or a mouthfeel to the gelled food.

A step of adding various additives described above other than the gelling agent to the gelled product may included if necessary.

A step of packaging the gelled product may be included. The step of packaging the gelled product may include a step of placing and packaging the gelled product in a mold, frame, case, or the like having various shapes.

At this time, the packaging step may include vacuum packaging, but is not limited thereto. Any known method for packaging food may be used.

Next, the heat sterilization step is a step of heat sterilizing the gelled product (or a gelled product added with an additive). Any known method for typically heat sterilizing a food may be used for the distribution and storage of the gelled food at room temperature or above.

The cooling step is a step of cooling the heat-sterilized gel product to finally solidify the same. The method for cooling the heat-sterilized gel product may be a method of leaving the heat-sterilized gel product at room temperature or room temperature, but is not limited thereto.

### ADVANTAGEOUS EFFECTS

A composition for a gelled food having a plurality of layers according to the present application uses agar or carrageenan as a main component of a gelling agent and mixes locust bean gum therewith in a specific ratio. Therefore, when a gelled food obtained from the composition for a gelled food is produced as a gelled food having a plurality of layers, the shape retainability of the gelled food is improved such that the plurality of layer are prevented from being collapsed or being mixed with each other even when the gelled food is distributed and stored for a long period of time at room temperature or above, so that the gelled food having a plurality of layers with different mouthfeels, tastes, and appearances may be produced.

Furthermore, since consumers may immediately eat the gelled food stored for a long period of time without taking any separate measurement, the consumers may be provided with a simple meal or snack. Even when stored for a long period of time and eaten as described above, the gelled food is excellent in sensory quality such as mouthfeel, flavor, and savor, so that there is an effect of providing a gelled food favorable to consumers.

In addition, when the composition for a gelled food is used, there is an effect in that microbial safety is significantly improved even when the composition is stored and distributed for a long period of time at room temperature or above.

### BRIEF DESCRIPTION OF THE DRAWINGS

FIG. 1 are images taken of gelled foods having a plurality of layers of Examples 1 to 8 according to Experimental Example 1 of the present application;
FIG. 2 are images taken of gelled foods having a plurality of layers of Reference Examples 1 to 10 according to Experimental Example 1 of the present application;
FIG. 3 are images taken of gelled foods having a plurality of layers of Comparative Examples 1 to 4 according to Experimental Example 1 of the present application; and
FIG. 4 are images taken of a gelled food immediately after being produced and after being stored (left) at 35°C for 3 months, the gelled food having a plurality of layers produced using a composition for a gelled food of Example 1 according to Experimental Example 3.

### MODE FOR CARRYING OUT THE INVENTION

Hereinafter, the present application will be described in detail with reference to Examples.

However, the following Examples are merely illustrative of the present application, and the contents of the present application are not limited by the following Examples.

### <Reference Example> - Manufacturing of first gelled food composition

By varying the type and content of gelling agents which may be used for the composition for a gelled food of the present application, processes were performed in the order of gelling agent weighing - purified water mixing - stirring and heating (for 10 minutes at 80°C or higher) - puree (mango puree, Capricorn, India), acidulant (hydrous citric acid, WEIFANG, China), flavoring (mango flavoring, Givuadan Korea, Singapore; orange flavoring, Sensient Food, China), sweetener (sugar, CheilJedang, South Korea; liquid fructose, CheilJedang, South Korea), vitamin (vitamin C, SHNDONG LUWEI, China) or coloring input and stirring - filling - sterilization - cooling to prepare compositions for a gelled food of Reference Examples 1 to 10. Compositions of Reference Examples 1 to 10 above are as shown in Table 2 below.

**[Table 2]**

| Classification (Unit: parts by weight) | Reference Examples | | | | | | | | | |
|---|---|---|---|---|---|---|---|---|---|---|
| | 1 | 2 | 3 | 4 | 5 | 6 | 7 | 8 | 9 | 10 |
| Agar (MSC, South Korea) | 0.5 | 1 | - | - | - | - | - | - | - | - |
| Carrageenan (CP KELCO, Denmark) | - | - | 0.5 | 1 | - | - | - | - | - | - |
| Locust bean gum (TATE&LYLE ITALIA SPA, Italy) | - | - | - | - | 0.5 | - | - | - | - | - |
| Xanthan gum (CP KELCO, China) | - | - | - | - | - | 0.5 | 1 | - | - | - |
| Low acyl gellan gum (CP KELCO, U.S.A.) | - | - | - | - | - | - | - | 0.5 | - | - |
| High acyl gellan gum (CP KELCO, U.S.A.) | - | - | - | - | - | - | - | - | 0.5 | 1 |

### <Examples and Comparative Examples> - Manufacturing of first gelled food composition

In order to produce the composition for a gelled food of the present application, gelling agent weighing - purified water mixing - stirring and heating (for 10 minutes at 80°C or higher) - puree (mango puree, Capricorn, India), acidulant (hydrous citric acid, WEIFANG, China), flavoring (mango flavoring, Givuadan Korea, Singapore; orange flavoring, Sensient Food, China), sweetener (sugar, CheilJedang, South Korea; liquid fructose, CheilJedang, South Korea), vitamin (vitamin C, SHNDONG LUWEI, China) or coloring input and stirring - filling - sterilization - cooling processes were sequentially performed.

By varying the type and content of gelling agents, compositions for a gelled food of Examples 1 to 8 were produced using compositions in Table 3 below, and compositions for a gelled food of Comparative Examples 1 to 4 were produced using compositions in Table 4 below.

**[Table 3]**

| Classification (Unit: wt%) | Example 1 | Example 2 | Example 3 | Example 4 | Example 5 | Example 6 | Example 7 | Example 8 |
|---|---|---|---|---|---|---|---|---|
| Agar (MSC, South Korea) | 0.6 | 0.6 | 0.8 | 0.8 | - | - | - | - |
| Carrageenan (CP KELCO, Denmark) | - | - | - | - | 0.6 | 0.6 | 0.8 | 0.8 |
| Locust bean gum (TATE&LYLE ITALIA SPA, Italy) | 0.2 | 0.4 | 0.1 | 0.2 | 0.2 | 0.4 | 0.1 | 0.2 |
| Xanthan gum (CP KELCO, China) | 0.2 | - | 0.1 | - | 0.2 | - | 0.1 | - |

**[Table 4]**

| Classification (Unit: wt%) | Comparative Example 1 | Comparative Example 2 | Comparative Example 3 | Comparative Example 4 |
|---|---|---|---|---|
| Agar (MSC, South Korea) | 0.6 | 0.8 | - | - |
| Carrageenan (CP KELCO, Denmark) | - | - | 0.6 | 0.8 |
| Locust bean gum (TATE&LYLE ITALIA SPA, Italy) | - | - | - | - |
| Xanthan gum (CP KELCO, China) | 0.4 | 0.2 | 0.4 | 0.2 |

### <Example 9> - Manufacturing of second gelled food composition

Using the following components, a jelly solution whose sugar content is at least 5 brix lower than that of each of the compositions for a gelled food of the above Examples 1 to 8, Reference Examples 1 to 10 and Comparative Examples 1 to 4 was prepared.

(Guar gum (PREMCEM GUMS, India), a gelling agent (Sanyoungwon, Japan), sugar (CheilJedang, South Korea), grapefruit concentrate (Gan shmuel, Israel), hydrous citric acid (WEIFANG, China), vitamin C (SHANDONG LUWEI, China), tomato coloring (aonecaf, South Korea), grapefruit aroma (ManKorea, China))

### <Experimental Example 1>

Layered gelled foods each having a plurality of layers were produced respectively using the compositions for a gelled food of Examples 1 to 8, Reference Examples 1 to 10, and Comparative Examples 1 to 4 as a first gelled food, and using the composition for a gelled food of Example 9 as a second gelled food. The physical properties of the layered gelled foods, such as composition viscosity, degree of multi-layer implementation, shape retainability of the first gelled food, and mouthfeel of the first gelled food, were evaluated. The evaluation results are shown in Table 5 to Table 7 below.

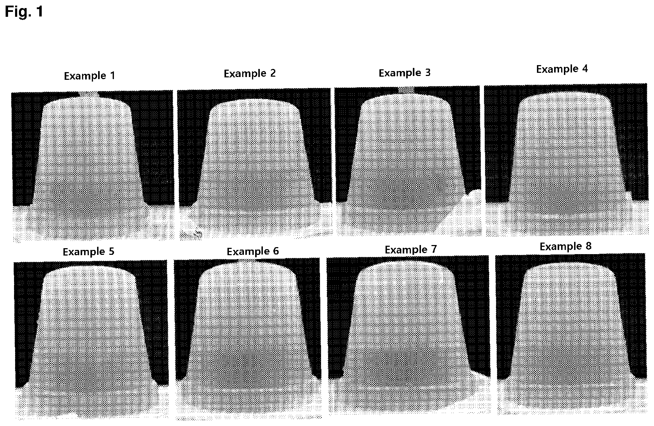

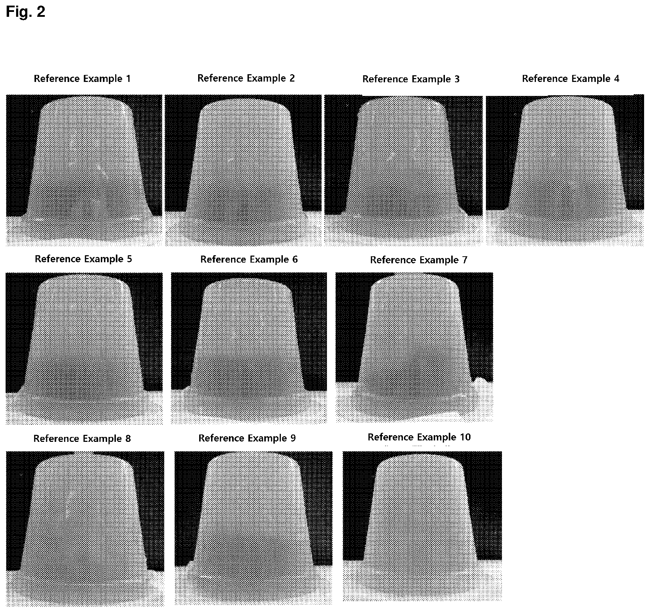

FIG. 1 shows photographs of layered gelled foods respectively using the compositions for a gelled food of Examples 1 to 8, FIG. 2 shows photographs of layered gelled foods respectively using the compositions for a gelled food of Reference Examples 1 to 10, and

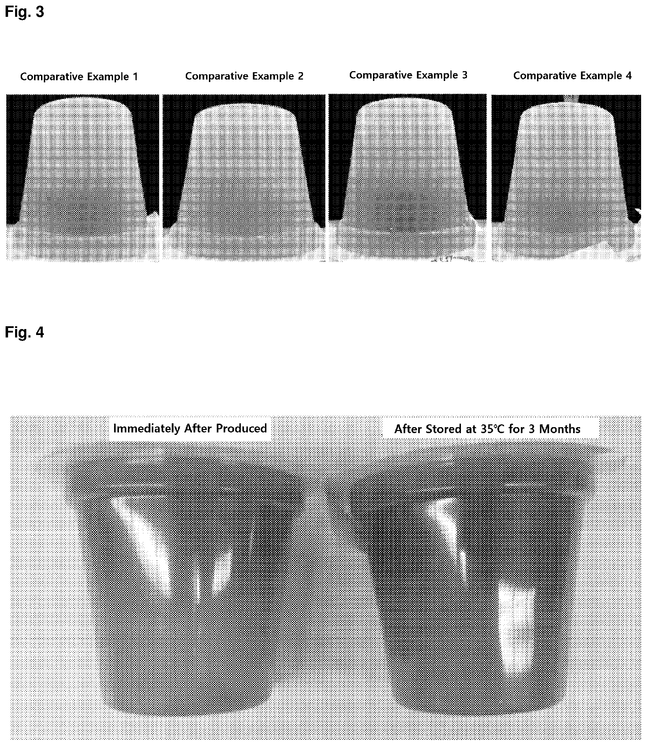

FIG. 3 shows photographs of layered gelled foods respectively using the compositions for a gelled food of Comparative Examples 1 to 4.

### Composition viscosity

After the first composition for a gelled food was produced, the state of the composition was observed with the naked eye and relatively evaluated.

(Evaluation criteria: The higher the viscosity of a jelly combination solution, the higher the stirring rate, which was denoted by • to compare and evaluate viscosities. When a homo disper (Primix Homo disper 2.5, Japan) was stirred with a stirring rod having a diameter of 40 mm, 4,000 rpm or higher was denoted by •••••, 3,000 rpm or greater was denoted by ••••, 1,500 rpm or greater was denoted by **•••,** 1,000 rpm or greater was denoted by ••, and less than 1,000 rpm was denoted by **•.**

### Degree of multi-layer implementation

After the layered gelled foods were cooled, the appearances thereof were captured to observe the degree of multi-layer implementation with the naked eye and relatively compared.

(Evaluation criteria: It was determined that the more the •, the more distinguished between multiple layers when observed with the naked eye. For example, when the boundary between layers was very clearly distinguished, it was denoted by **••,** when the boundary between layers was distinguished but the boundary line was slightly blurred, it was denoted by •, and when multiple layers were not implemented, it was denoted by X.

### Meltability

Whether the first composition for a gelled food was melted at a high temperature was observed with the naked eye. It can be confirmed that as the melting is facilitated, a product of excellent quality with no granules may be produced, and an effect of implementing multiple layers is excellent.

(Evaluation criteria: After the production of the first composition for a gelled food, if a jelly was completely melted after being heated at 80°C for 30 minutes or more, it was denoted by o, otherwise denoted by X)

### First gelled food shape retainability

A portion of the first gelled food in the layered gelled food was spooned, and then the appearance of the portion was observed with the naked eye.

(Evaluation criteria: It was determined that the more the •, the more firm the appearance and the more excellent the shape retainability. Specifically, when in the form of a firm jelly, it was denoted by **••,** when in the form of a firm jelly and a bit viscous, it was denoted by **•** 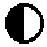 **,** if the shape is not distinct, or in a viscous liquid phase, it was denoted by •, and if the shape retainability is too poor to determine a shape, it was denoted by X)

### First celled food mouthfeel

Three panelists tasted portions of the first gelled food of the layered gelled foods for each experimental group, and then sensory test was performed.

(Evaluation criteria: Physical properties and sensory quality felt on the tongue after tasting the portions of the first gelled foods were described)

**[Table 5]**

| Classification | Examples | | | | | | | |
|---|---|---|---|---|---|---|---|---|
| | 1 | 2 | 3 | 4 | 5 | 6 | 7 | 8 |
| Composition viscosity | •• | • | •• | • | ••• | •• | •• | • |
| Degree of multi-layer implementatio n | • | • | •• | •• | •• | • | •• | • |
| Meltability | ∘ | ∘ | ∘ | ∘ | ∘ | ∘ | ∘ | ∘ |
| First gelled food shape retainability | •• | • 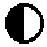 | • 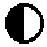 | •• | •• | •• | X | •• |
| First gelled food mouthfeel | Smooth and hard jelly mouthf eel | Weak jelly mouthf eel | Weak puree mouthf eel | Stronge r pressin g power with a tongue than Exampl e 3, and puree mouthf eel | Smooth , hard and resilient jelly mouthf eel | Jelly mouthf eel | Sol-like liquid feel | Non-smooth hard jelly |

**[Table 6]**

| Classificati on | Reference Examples | | | | | | | | | |
|---|---|---|---|---|---|---|---|---|---|---|
| | 1 | 2 | 3 | 4 | 5 | 6 | 7 | 8 | 9 | 10 |
| Compositio n viscosity | •• | •• | •• | •• | • | ••• | •••• | ••• | •••• | •••• • |
| Degree of multi-layer implementa tion | •• | •• | •• | •• | •• | •• | • | X | • | X |
| Meltability | ∘ | ∘ | ∘ | ∘ | ∘ | ∘ | X | X | ∘ | X |
| First gelled food shape retainability | • | • | • | • | X | X | • | X | •• | ••• |
| First gelled food mouthfeel | Crum bling and scatte ring like sand | No effect in accor dance with an | Scatt ering | No chew y mouth feel in accor dance | Comp lete liquid | Sticky liquid | Stretc hed like a long taffy stick | Visco us liquid | Glutin ous prope rties, and unabl e to | Not meltin g in the mouth due to glutin |
| | | increa se in blendi ng ratio, high conte nt of moist ure and still scatte ring | | with an increa se in blendi ng ratio and scatte ring | | | | | form a compl ete shape | ous prope rties |

**[Table 7]**

| Classification | Comparative Example 1 | Comparative Example 2 | Comparative Example 3 | Comparative Example 4 |
|---|---|---|---|---|
| Composition viscosity | ••• | ••• | •••• | ••• |
| Degree of multi-layer implementation | •• | • | • | •• |
| Meltability | ∘ | ∘ | ∘ | ∘ |
| First gelled food shape retainability | X | X | • | X |
| First gelled food mouthfeel | Viscous liquid | Slimy viscous liquid | Viscous liquid | Viscous liquid |

According to Table 6, in the cases of Reference Example 1 in which only agar was used as a gelling agent and Reference Example 3 in which only carrageenan was used as a gelling agent, multi-layered jellies were implemented, but it was impossible to conduct the TA analysis due to poor shape retainability. Even in the case of Reference Example 2 in which the content of agar was increased by two times compared to Reference Example 1, a multi-layered jelly was implemented, but the shape thereof was still not distinct, and also in the case of Reference Example 4 in which the content of carrageenan was increased by two times compared to Reference Example 3, a multi-layered jelly was implemented, but the shape thereof was still not distinct.

Therefore, referring to the results according to a single gelling agent, when the viscosity, degree of multi-stage implementation, meltability, and shape retainability were comprehensively considered, agar or carrageenan was suitable as a gelling agent to be used in a gelled food having a plurality of layer than other types of gelling agents. However, when productivity during mass production, ease of storage after production, and ease of distribution were considered, it was confirmed that shape retainability was weak when agar or carrageenan was used alone, and it was confirmed that an effect of increasing shape retainability was insignificant.

On the other hand, Reference Example 5 in which only locust bean gum was used as a gelling agent was in a liquid state without being completely gelled, and Reference Example 6 and Reference Example 7 in which only xanthan gum was used as a gelling agent were also in a liquid state without being gelled.

In the case of Reference Example 8 in which low acyl gellan gum was used as a gelling agent, the degree of multi-layer implementation was poor, and Reference Example 9 in which high acyl gellan gum was not completely gelled, and thus, had a problem with meltability. It was confirmed that Reference Example 10 in which the content of high acyl gellan gum was increased compared to Reference Example 9 had a problem with multi-layer implementation.

Therefore, for a gelled food with excellent multi-layer implementation and excellent shape retainability, it was confirmed that agar or carrageenan should be used as a main component, yet should be mixed and combined with other gums to satisfy and/or supplement shape retainability.

According to Table 5 and Table 7, when Example 1 and Comparative Example 2, or Example 2 and Comparative Example 1 were compared, it was confirmed that shape retainability was not improved by mixing xanthan gum when agar was used a main component of a gelling agent, but shape retainability was improved in the cases of Examples 1 and 2 in which locust bean gum was mixed.

When Example 5 and Comparative Example 4, or Example 6 and Comparative Example 3 were compared, it was confirmed that shape retainability was not improved by mixing xanthan gum when carrageenan was used a main component of a gelling agent, but shape retainability was improved in the cases of Examples 5 and 6 in which locust bean gum was mixed.

That is, since the gelled foods according to Examples 1 to 8 satisfied all the properties of viscosity of •• or less, degree of multi-layer implementation of • or more, meltability of o, and shape retainability of • 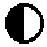 or more, it was confirmed that the shape retainability of a gelled food having a plurality of layers was maintained with no collapsed layers, and that sensory quality such as mouthfeel was also improved, which is the object of the present application.

### <Experimental Example 2>

Layered gelled foods were produced respectively using the gelled foods of Examples 1 to 8, and the compositions for a gelled food of Reference Examples 2 to 10, and Comparative Examples 1 to 3 as a first gelled food, and using the composition for a gelled food of Example 9 as a second gelled food. The results measured using a Texture Analyzer (TAXT-plus, Stable Micro System, UK) for 80 g of each sample of portions of the first gelled foods are shown in Table 9 below. The TA analysis results were measured twice or three times to determine an average value. In the case of Reference Examples 1, and 3 to 9, and Comparative Example 4, it was impossible to conduct the TA analysis due to very poor shape retainability.

The measurement conditions are as shown below.

### Sample amount: 80 g

| Items | Conditions |
|---|---|
| Probe | Circular shape, diameter 35 mm |
| Pre-test speed | 5 mm/sec |
| Test speed | 2 mm/sec |
| Post-test speed | 2 mm/sec |
| Pressure | 98% compression |
| Height | 50 mm |

It was determined that the height of the first peak was compression strength, the difference value between the first peak and the negative peak was fracturability, the height of the second peak was hardness (degree of firmness), and the absolute value of the second negative peak was viscosity.

**[Table 8]**

| Classifi cation | Numbe r of measur ements | Compression strength (N) | Fracturability (Fracturability) (N) | Hardness (Hardness (Degree of firmness)) (N) | Viscosity (Viscosity) (N) |
|---|---|---|---|---|---|
| Exampl | 1 | 7.81 | 6.56 | 7.49 | -1.08 |
| e 1 | 2 | 8.66 | 6.5 | 6.38 | -1.7 |
| | Averag e | 8.24 | 6.53 | 6.94 | -1.39 |
| Exampl e2 | 1 | 6.96 | 4.87 | 6.11 | -1.77 |
| | 2 | 6.75 | 5.17 | 5.65 | -1.48 |
| | Averag e | 6.86 | 5.02 | 5.88 | -1.63 |
| Exampl e3 | 1 | 5.17 | 3.41 | 6.73 | -2.79 |
| | 2 | 5.57 | 4.92 | 5.6 | -2.03 |
| | Averag e | 5.37 | 4.17 | 6.17 | -2.41 |
| Exampl e 4 | 1 | 7.15 | 5.51 | 6.92 | -2.76 |
| | 2 | 3.56 | 2.12 | 7.06 | -2.76 |
| | 3 | 5.18 | 3.8 | 6.57 | -2.6 |
| | Averag e | 5.3 | 3.81 | 6.85 | -2.71 |
| Exampl e5 | 1 | 7.47 | 5.64 | 5.9 | -0.84 |
| | 2 | 9.92 | 8.29 | 7.87 | -1.67 |
| | 3 | 10.15 | 5.87 | 10.58 | -1.97 |
| | Averag e | 9.18 | 6.6 | 8.12 | -1.49 |
| Exampl e6 | 1 | 15.42 | 9.96 | 9.25 | -1.73 |
| | 2 | 17.02 | 11.46 | 11.77 | -0.65 |
| | 3 | 16.33 | 8.04 | 13.86 | -1.34 |
| | Averag e | 16.26 | 9.82 | 11.63 | -1.24 |
| Exampl e7 | 1 | 1.21 | 0.76 | 3.5 | -1.08 |
| | 2 | 1.53 | 0.62 | 6.27 | -2.38 |
| | Averag e | 1.37 | 0.69 | 4.89 | -1.73 |
| Exampl e8 | 1 | 12.18 | 9.89 | 8.58 | -0.83 |
| | 2 | 18.07 | 14.64 | 13.25 | -1.34 |
| | 3 | 13.09 | 10.45 | 11.99 | -1.27 |
| | Averag e | 14.45 | 11.66 | 11.27 | -1.15 |
| Refere nce Exampl e2 | 1 | 0.83 | 0.02 | 6.41 | 3.12 |
| | 2 | 0.7 | 0.12 | 5.89 | 2.99 |
| | 3 | 2.36 | 0.87 | 9.2 | 4.66 |
| | Averag e | 1.3 | 0.34 | 7.17 | 3.59 |
| Refere nce Exampl e 10 | 1 | 11.22 | 5.44 | 15.01 | -4.42 |
| | 2 | 7.34 | 0.92 | 15.4 | -3.69 |
| | 3 | 12.59 | 7.01 | 12.55 | -3.86 |
| | Averag e | 10.38 | 4.46 | 14.32 | -3.99 |
| Compa rative Exampl e 1 | 1 | 1.21 | 0.77 | 2.8 | -1.19 |
| | 2 | 1.18 | 0.85 | 2.76 | -0.91 |
| | Averag e | 1.2 | 0.81 | 2.78 | -1.05 |
| Compa rative Exampl e2 | 1 | 1.89 | 1.48 | 3.07 | -1.55 |
| | 2 | 2.16 | 1.66 | 3.18 | -1.35 |
| | Averag e | 2.03 | 1.57 | 3.13 | -1.45 |
| Compa rative Exampl e3 | 1 | 2.76 | 2.04 | 3.88 | -1.16 |
| | 2 | 3.36 | 2.4 | 3.82 | -1.51 |
| | Averag e | 3.06 | 2.22 | 3.85 | -1.34 |

According to Table 8, it was confirmed that in the cases of Reference Examples 1, and 3 to 9 in which only one type of a gelling agent was used, it was impossible to conduct the TA analysis, Reference Example 2 in which agar was included in excess had low compression strength, and thus, had a problem with shape retainability, and Reference Example 10 in which high acyl gellan gum was included in excess had a problem with the degree of multi-layer implementation.

Meanwhile, Comparative Example 1 to Comparative Example 3 respectively had a hardness (degree of firmness) of 2.78 (N), 3.13 (N), and 3.85 (N), and thus, had a problem with shape retainability. In comparison, it was confirmed that Examples 1 to 8 satisfied desired physical properties, both compression strength and hardness, and thus, had excellent shape retainability.

### <Experimental Example 3>

A layered gelled food was produced respectively using the composition for a gelled food of Examples 1 as a first gelled food, and using the composition for a gelled food of Example 9 as a second gelled food. Immediately after the layered gelled food was produced, the concentration of microorganisms was confirmed, and after the layered gelled food was stored (left) at 35°C for 3 months, it was confirmed that aerobic bacteria, E.coli, and yeast/mold were not detected. FIG. 4 are images taken of the gelled food immediately after being produced and after being stored (left) at 35°C for 3 months.

## Claims

1. A composition for a gelled food having a plurality of layers and comprising a gelling agent including:
(a) at least one selected from agar and carrageenan; and
(b) locust bean gum.

2. The composition of claim 1, wherein based on the total weight of the composition for a gelled food, the agar is included in an amount of 0.5 to 1 wt%, and the carrageenan is included in an amount of 0.5 to 1 wt%.

3. The composition of claim 1, wherein based on the total weight of the composition for a gelled food, the locust bean gum is included in an amount of 0.1 to 0.7 wt%.

4. The composition of claim 3, wherein:
in the case in which the gelling agent includes agar, the locust bean gum is included in an amount of 0.1 to 0.7 wt% based on the total weight of the composition for a gelled food; and
in the case in which the gelling agent includes carrageenan, the locust bean gum is included in an amount of 0.2 to 0.7 wt% based on the total weight of the composition for a gelled food.

5. The composition of claim 1, wherein the total amount of the gelling agent is 0.8 to 1.2 wt% based on the total weight of the composition for a gelled food.

6. The composition of claim 1, wherein the gelling agent further comprises at least one selected from xanthan gum, guar gum, Arabic gum, and tara gum.

7. The composition of claim 6, wherein based on the total weight of the composition for a gelled food, at least one among the xanthan gum, the guar gum, the Arabic gum, and the tara gum is included in an amount of 0.1 to 0.2 wt%.

8. The composition of claim 1, wherein the composition for a gelled food further comprises at least one selected from puree, an acidulant, a flavoring, and a sweetener.

9. A gelled food having a plurality of layers and comprising the composition for a gelled food having a plurality of layers of any one of claim 1 to claim 8.

10. The gelled food of claim 9, wherein the difference in sugar content between one layer of the gelled food having a plurality of layers and the other layers thereof is 5 brix or more.

11. The gelled food of claim 9, wherein the compression strength of a layer including the composition for a gelled food in the gelled food having a plurality of layers is 3.1 to 20 N.

12. The gelled food of claim 9, wherein the hardness of a layer including the composition for a gelled food in the gelled food having a plurality of layers is 5 to 15 N.

13. The gelled food of claim 9, wherein the change in microbial concentration between immediately after the preparation of a layer including the composition for a gelled food in the gelled food having a plurality of layers and after the storage of the layer at 35°C for 3 months is less than 10¹ CFU/g.
